# EUROPÄISCHE PATENTSCHRIFT

(11) **EP 3 921 928 B1**
(45) Veröffentlichungstag und Bekanntmachung des Hinweises auf die Patenterteilung: **15.02.2023**
(21) Anmeldenummer: 20710980.2
(22) Anmeldetag: 19.03.2020
(51) Int. Cl.: H02K 15/02

(54) **VERFAHREN ZUR FERTIGUNG EINES MAGNETBLECHS UND EINES MAGNETBLECHSTAPELS SOWIE ELEKTRISCHE MASCHINE UND ELEKTRISCHES FAHRZEUG**
METHOD FOR PRODUCING A MAGNETIC SHEET AND A MAGNETIC SHEET STACK AND ELECTRIC MACHINE AND ELECTRIC VEHICLE
PROCÉDÉ DE FABRICATION D'UNE TÔLE MAGNÉTIQUE ET D'UN EMPILEMENT DE TÔLES MAGNÉTIQUES AINSI QUE MACHINE ÉLECTRIQUE ET VÉHICULE ÉLECTRIQUE

(30) Priorität: 09.04.2019 EP 19168227
(43) Veröffentlichungstag der Anmeldung: 15.12.2021
(73) Patentinhaber: Siemens Aktiengesellschaft, 80333 München (DE)
(72) Erfinder: SCHUH, Carsten, 85598 Baldham (DE); VOLLMER, Rolf, 36129 Gersfeld (DE)
(86) Internationale Anmeldenummer: PCT/EP2020/057611
(87) Internationale Veröffentlichungsnummer: WO 2020/207739

(56) Entgegenhaltungen:
- EP-A1- 2 693 612
- EP-A1- 3 131 189
- EP-A1- 3 193 431
- EP-A1- 3 255 758
- US-A1- 2018 323 666

## Beschreibung

Die Erfindung betrifft ein Verfahren zur Fertigung eines Magnetblechs und eines Magnetblechstapels sowie eine elektrische Maschine und ein elektrisches Fahrzeug.

Ein neues Verfahren zur Herstellung von Magnetblechen für elektrische Maschinen nutzt den Schablonendruck. Bei diesem Verfahren wird ausgehend von Metallpulvern zunächst eine Druckpaste erzeugt, welche dann mittels einer Schablonendrucktechnik zu einem Grünkörper in Gestalt einer Dickschicht verarbeitet wird. Anschließend wird dieser Grünkörper durch thermische Behandlung, das heißt mittels Entbinderung und Sinterung, in ein metallisches, strukturiertes Blech in Gestalt eines Magnetblechs überführt. Es ist bekannt, auch mehrkomponentige Magnetbleche auf diese Weise herzustellen. Dazu werden die verschiedenen Komponenten eines Magnetblechs sequenziell hintereinander auf eine Trägerplatte gedruckt und danach gemeinsam thermisch behandelt.

Jedoch können nicht sämtliche Werkstoffe bei diesem Verfahren zur Sinterung herangezogen werden. Insbesondere ist das Sintern von verzugfreiem und dichtem Sinterzeug auf diese Weise nur schwer zu realisieren. Die folgenden Dokumente zeigen bereits verschiedene Verfahren zur Herstellung von elektrischen Maschinen mittels additiver Fertigung: EP 3 193 431 A1, EP 2 693 612 A1 und EP 3 255 758 A1.

Es ist daher Aufgabe der Erfindung, ein Verfahren zur Fertigung eines Magnetblechstapels mit mehrkomponentigen Magnetblechen anzugeben, welches die eingangs erwähnten Nachteile überwindet. Ferner ist es Aufgabe der Erfindung, einen verbesserten Magnetblechstapel und eine verbesserte elektrische Maschine sowie ein verbessertes elektrisches Fahrzeug anzugeben.

Diese Aufgabe der Erfindung wird mit einem Verfahren zur Fertigung eines Magnetblechstapels mit den in Anspruch 1 angegebenen Merkmalen, mit einem Magnetblechstapel mit den in Anspruch 6 angegebenen Merkmalen, mit einer elektrischen Maschine mit den in Anspruch 7 angegebenen Merkmalen sowie mit einem elektrischen Fahrzeug mit den in Anspruch 8 angegebenen Merkmalen gelöst.

Bevorzugte Weiterbildung der Erfindung sind in den zugehörigen Unteransprüchen, der nachfolgenden Beschreibung und der Zeichnung angegeben.

Bei dem erfindungsgemäßen Verfahren zur Fertigung eines Magnetblechstapels wird ein nichtmagnetisches Blech mit flächiger Erstreckung herangezogen. Es wird ein Blech herangezogen, welches entlang der flächigen Erstreckung ausgenommene Bereiche aufweist, wobei diese Bereiche mittels additiver Fertigung eines weichmagnetischen Materials gefüllt werden, welches stoffschlüssig an das Blech angebunden wird. Zweckmäßig wird das weichmagnetische Material bei oder infolge der additiven Fertigung stoffschlüssig an das Blech angebunden. Auf diese Weise lassen sich mehrkomponentige Magnetbleche auch mit solchen Komponenten herstellen, welche chemisch inkompatibel sind oder welche stark unterschiedliche Schwindungen bei Kosinterverfahren aufweisen. Weiterhin lassen sich mittels des erfindungsgemäßen Verfahrens auch mehrkomponentige Bleche aus solchen Komponenten fertigen, welche in einer kostengünstig herstellbaren und sinterfähigen Pulverform nicht verfügbar vorliegen. Ferner erlaubt das erfindungsgemäße Verfahren mehr Freiheitsgrade bei der Gestaltung von mehrkomponentigen Magnetblechen, da die Magnetbleche einfach stapelbar sind und gestapelte Magnetbleche nicht notwendigerweise identisch ausgebildet sein müssen. Insbesondere unterliegt das weichmagnetische Material bei einem Stapel von erfindungsgemäß gefertigten Magnetblechen keinerlei geometrischen Restriktionen bei dessen räumlicher Anordnung innerhalb dieses Stapels.

Es versteht sich, dass mit "ausgenommenen Bereichen" insbesondere solche Bereiche gemeint sein können, welche bei der Fertigung des Blechs, insbesondere bei einer additiven Fertigung des Blechs, ausgenommen, d.h. ausgespart, worden sind. Alternativ oder zusätzlich und ebenfalls bevorzugt können auch solche Bereiche als "ausgenommene Bereiche" angesehen werden, welche subtraktiv aus einem zuvor gefertigten Blech in der Art von Ausnehmungen ausgenommen, d.h. subtraktiv entfernt, worden sind, beispielsweise mittels Stanzens und/oder Schneidens, insbesondere Laserschneidens oder Wasserstrahlschneidens.

In einer bevorzugten Weiterbildung des erfindungsgemäßen Verfahrens erfolgt die additive Fertigung mittels Pulverauftragsschweißens und/oder mittels eines drahtbasierten Lichtbogens und/oder mittels *Cold Metal Transfers,* insbesondere laser- und/oder lichtbogenbasiert. Mittels der genannten Fertigungsverfahren lässt sich effizient und einfach additiv fertigen, wobei das additiv gefertigte Material mit dem Substrat, auf welchem das Material der additiven Fertigung aufgetragen wird, eine besonders stabile stoffschlüssige Verbindung eingeht. Auf diese Weise lässt sich folglich eine stoffschlüssige Verbindung des additiv gefertigten Materials mit dem Blech besonders leicht erreichen.

Alternativ oder zusätzlich und ebenfalls bevorzugt erfolgt die additive Fertigung mittels Druckens von partikelgefüllten Pasten. Auch auf diese Weise kann leicht eine stoffschlüssige Verbindung von additiv gefertigtem Material mit dem Blech erreicht werden.

Bei dem erfindungsgemäßen Verfahren wird ein nichtmagnetisches Blech herangezogen, in dem zumindest ein Stanzteil und/oder ein Schneidteil, insbesondere ein Laserschneid- und/oder Siebdruckteil und/oder Schablonendruckteil als Blech herangezogen wird. Besonders bevorzugt wird bei dem erfindungsgemäßen Verfahren das Stanzteil und/oder Schneidteil, insbesondere das Laserschneidteil und/oder Sieb- und/oder Schablonendruckteil, in einem Verfahrensschritt des erfindungsgemäßen Verfahrens gefertigt. Das heißt vorzugsweise wird das Blech mittels Stanzens und/oder Schneidens und/oder Laserschneidens und dabei insbesondere mittels subtraktiver Entfernung von Material zur Bildung der ausgenommen Bereiche, und/oder mittels Siebdruckens und dabei insbesondere mittels Aussparens der ausgenommenen Bereiche, gefertigt und für das weitere erfindungsgemäße Verfahren bereitgestellt. Dabei müssen das vorzugsweise nichtmagnetische Blech und das weichmagnetische Material nicht mittels derselben Fertigungstechniken gefertigt werden, sodass insbesondere unterschiedlich starke Schwindungsverläufe der verschiedenen Materialien der Fertigung des Magnetblechs mittels des erfindungsgemäßen Verfahrens nicht entgegenstehen.

Geeigneterweise wird bei dem erfindungsgemäßen Verfahren an oder entlang zumindest einer flächigen Erstreckung des Magnetblechs ein elektrisches Isolationsmaterial angeordnet.

Besonders bevorzugt wird bei dem erfindungsgemäßen Verfahren nicht nur ein Magnetblech, sondern es werden mehrere Magnetbleche mittels des erfindungsgemäßen Verfahrens wie vorhergehend beschrieben gefertigt, wobei als zusätzlicher Verfahrensschritt die Magnetbleche gestapelt werden. In dieser Weiterbildung des erfindungsgemäßen Verfahrens wird also nicht lediglich ein einzelnes Magnetblech gefertigt, sondern es handelt sich um ein erfindungsgemäßes Verfahren zur Fertigung eines Magnetblechstapels. Mittels eines solchen Magnetblechstapels kann ein Rotor und/oder ein Stator einer elektrischen Maschine gefertigt werden, sodass das erfindungsgemäße Verfahren wie vorstehend beschrieben zur Fertigung einer elektrischen Maschine herangezogen werden kann.

Bei dem erfindungsgemäßen Verfahren werden zur Fertigung eines Magnetblechstapels die Magnetbleche, bevor sie gestapelt werden, getempert, um Kornwachstum und/oder Interdiffusion an stoffschlüssigen Verbindungsstellen anzupassen. Vorzugsweise werden die Magnetbleche, bevor sie gestapelt werden, thermisch behandelt und/oder entbindert und/oder gesintert.

Alternativ und ebenfalls bevorzugt werden die Magnetbleche, bevor sie gestapelt werden, gewalzt. Im Falle der thermischen Prozessierung können die Magnetbleche mittels Drucks von partikelgefüllten Pasten gefertigt werden.

Mittels Temper- oder Nachglühprozessen lässt sich vorteilhaft die Mikrostruktur der Magnetbleche modifizieren. Damit können Kornwachstum und/oder Interdiffusion an stoffschlüssigen Verbindungsstellen und/oder Texturierungen der Magnetbleche angepasst werden. Mittels Walzens der Magnetbleche lässt sich zudem eine homogene Blechdicke der Magnetbleche sowie eine homogene Oberfläche der Magnetbleche erzielen.

Der erfindungsgemäße Magnetblechstapel ist nach einem Verfahren wie vorhergehend beschrieben hergestellt. Erfindungsgemäß sind die Magnetbleche des Magnetblechstapels entlang einer Stapelrichtung einander folgend gestapelt, wobei diejenigen Bereiche, welche mittels additiver Fertigung mit weichmagnetischem Material gefüllt sind, vorzugsweise nicht notwendig sämtlich vollständig überlappen. In dieser Weiterbildung der Erfindung, in welchem die Bereiche, welche mittels additiver Fertigung mit weichmagnetischem Material gefüllt sind, nicht vollständig überlappen, können somit entlang der Stapelrichtung beliebige Geometrien weichmagnetischen Materials realisiert werden. Erfindungsgemäß lässt sich folglich die magnetische Struktur des Magnetblechstapels beliebig einstellen. Die erfindungsgemäße elektrische Maschine weist einen Rotor und/oder Stator auf, welcher mit einem Magnetblechstapel wie vorstehend beschrieben und/oder mit einem erfindungsgemäßen Verfahren zur Fertigung eines Magnetblechstapels wie vorstehend beschrieben und/oder mit einem erfindungsgemäßen Verfahren zur Fertigung eines Magnetblechs wie vorstehend beschrieben gebildet ist.

Das erfindungsgemäße elektrische Fahrzeug ist mit einer solchen elektrischen Maschine wie vorstehend beschrieben gebildet.

Nachfolgend wird die Erfindung anhand eines in einer Zeichnung dargestellten Ausführungsbeispiels näher erläutert. Es zeigen:
- Figur 1: einen erfindungsgemäßen Magnetblechstapel schematisch in einer Draufsicht,
- Figur 2: den erfindungsgemäßen Magnetblechstapel gemäß Figur 1 schematisch im Querschnitt sowie
- Figur 3: ein erfindungsgemäßes elektrisches Fahrzeug mit einer erfindungsgemäßen elektrischen Maschine mit einem Rotor und einem Stator mit je einem erfindungsgemäßen Magnetblechstapel gem. Fig. 1 und 2 schematisch in einer Prinzipskizze.

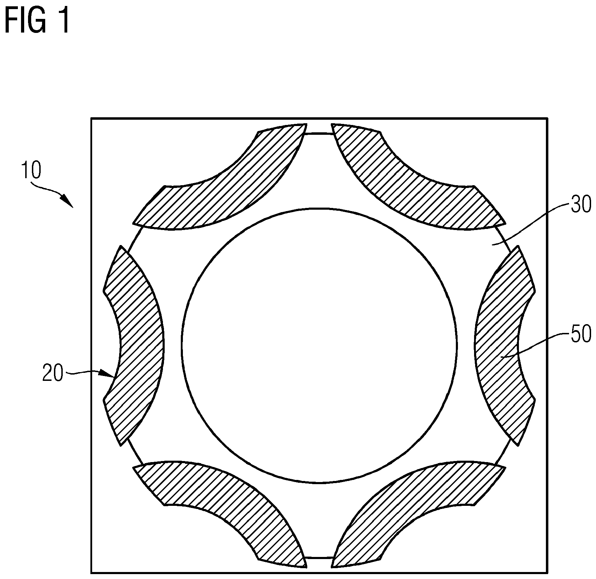

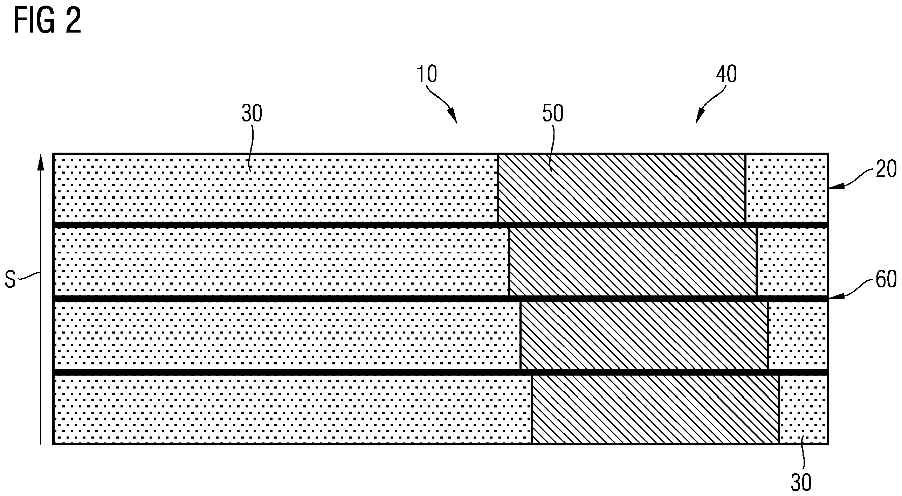

Der in den Figuren 1 und 2 dargestellte erfindungsgemäße Magnetblechstapel 10 ist erfindungsgemäß gefertigt und weist erfindungsgemäß gefertigte Magnetbleche 20 auf. Die Magnetbleche 20 umfassen jeweils ein vorgefertigtes nichtmagnetisches Metallblech 30, bei welchem in der flächigen Erstreckung ein Bereich 40 ausgenommen ist, der mit weichmagnetischem Material 50 gefüllt ist. Der Bereich 40 ist beispielsweise ausgenommen, indem das Metallblech 30 jeweils mittels Siebdruckens gefertigt und der Bereich 40 während des Siebdruckens ausgespart worden ist. Alternativ kann in weiteren Ausführungsbeispielen das Metallblech 30 jeweils auch gefertigt sein, indem zunächst das Metallblech 30 vollflächig gefertigt ist und nachfolgend entlang der Bereiche 40 Material aus dem Metallblech 30 subtraktiv entfernt ist, beispielsweise mittels Stanzens oder Laserschneidens oder Wasserstrahlschneidens. Die vorgenannten Fertigungsschritte zur Fertigung der Metallbleche 30 sind in weiteren Ausführungsbeispielen jeweils Schritte der erfindungsgemäßen Verfahren zur Fertigung der erfindungsgemäßen Magnetbleche 20 und des erfindungsgemäßen Magnetblechstapels 10. Das weichmagnetische Material 50 ist im dargestellten Ausführungsbeispiel mittels Pulverauftragsschweißens in den Bereich 40 eingebracht, sodass das weichmagnetische Material 50 mit dem Metallblech 30 stoffschlüssig verbunden ist. Alternativ und in der Zeichnung nicht dargestellt kann das weichmagnetische Material 50 auch mittels eines drahtbasierten Lichtbogenschweißverfahrens und/oder mittels Cold Metal Transfers, insbesondere laserbasiert oder lichtbogenbasiert, additiv abgeschieden werden. In einem weiteren ebenfalls nicht gesondert gezeigten Ausführungsbeispiel wird weichmagnetisches Material additiv mittels Druckens von Pasten in den Bereich 40 eingebracht, welche Partikel weichmagnetischen Materials aufweisen.

Die Magnetbleche 20 weisen wie in Figur 2 dargestellt eine sich horizontal erstreckende flächige Erstreckung auf. Die Magnetbleche 20 sind in vertikaler Richtung, das heißt entlang einer vertikalen Stapelrichtung S, gestapelt. Der Bereich 40 weichmagnetischen Materials 50 überlappt sich bei aufeinanderfolgenden Magnetblechen 20 in Stapelrichtung S nicht vollständig: Vielmehr ist der Bereich 40 weichmagnetischen Materials 50 bei Fortschreiten in vertikaler Richtung in horizontaler Richtung, das heißt in Richtung der flächigen Erstreckung, versetzt. Das weichmagnetische Material 50 erstreckt sich folglich nicht entlang eines sich in Stapelrichtung fortstreckenden mathematischen Zylinders, sondern der Bereich des weichmagnetischen Materials 50 verläuft gegenüber der Stapelrichtung leicht geneigt. Die Magnetbleche 20 bilden den Magnetblechstapel 10 derart, dass die Magnetbleche 20, bevor sie gestapelt werden, gewalzt werden. Im Falle einer Bildung des weichmagnetischen Materials 50 mittels Druckens von partikelgefüllten Pasten werden die Magnetbleche 20 vor ihrer Zusammenführung zum Magnetblechstapel 10 zudem getempert und/oder thermisch behandelt und/oder entbindert und/oder gesintert. Vor dem Zusammenfügen zum Magnetblechstapel 10 werden die Magnetbleche 20 zusätzlich mit einer Isolationsschicht 60 versehen, welche auf die flächigen Erstreckungen der Magnetbleche 20 aufgetragen wird. Die Isolationsschicht 60 ist im dargestellten Ausführungsbeispiel ein Lack. Die Isolationsschicht 60 kann im weiteren Ausführungsbeispiel grundsätzlich auch auf andere Weise gebildet sein. Mittels der Isolationsschicht 60 sind die Magnetbleche 20 voneinander elektrisch isoliert. Die Magnetbleche 20 werden in Stapelrichtung S aufeinander gestapelt und bilden somit den erfindungsgemäßen Magnetblechstapel 10 aus.

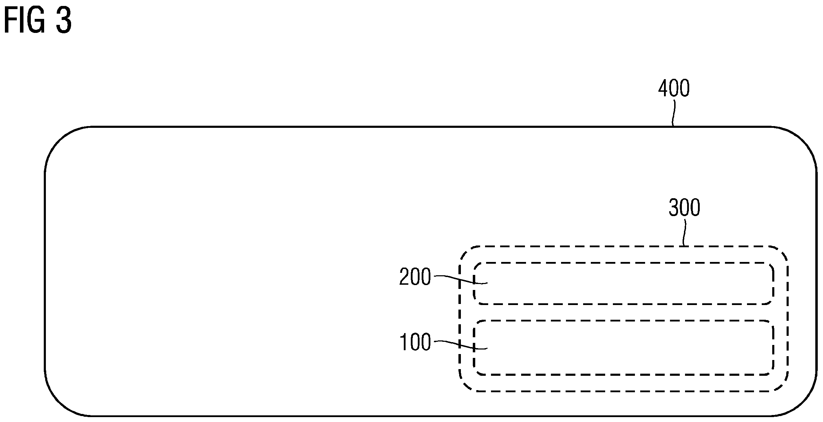

Die in Fig. 3 dargestellte erfindungsgemäße elektrische Maschine 300 weist einen Rotor 100 und einen Stator 200 auf, wobei sowohl der Rotor 100 als auch der Stator 200 mit einem erfindungsgemäßen Magnetblechstapel 10 wie zuvor beschrieben gebildet sind.

Das in Fig. 3 schematisch dargestellte elektrische Fahrzeug 400 ist beispielsweise ein hybridelektrisches Flugzeug und weist die zuvor beschriebene erfindungsgemäße elektrische Maschine 300 auf.

## Patentansprüche

1. Verfahren zur Fertigung eines Magnetblechstapels für eine elektrische Maschine (20), bei welchem mehrere Magnetbleche (20) gestapelt werden, die nach einem Verfahren gefertigt werden bei welchem ein nichtmagnetisches Blech (30) mit flächiger Erstreckung herangezogen wird, das als ein Stanzteil und/oder ein Schneidteil gefertigt wird, welches entlang der flächigen Erstreckung ausgenommene Bereiche (40) aufweist, wobei diese Bereiche (40) mittels additiver Fertigung eines weichmagnetischen Materials (50) gefüllt werden, welche stoffschlüssig an das Blech (30) angebunden werden, wobei die Magnetbleche (20), bevor sie gestapelt werden, getempert werden, um Kornwachstum und/oder Interdiffusion an stoffschlüssigen Verbindungsstellen anzupassen.

2. Verfahren nach Anspruch 1, bei welchem die additive Fertigung mittels Pulverauftragsschweißens und/oder mittels eines drahtbasierten Lichtbogens und/oder mittels Cold Metal Transfers, insbesondere laserbasiert und/oder lichtbogenbasiert, und/oder mittels Druckens von partikelgefüllten Pasten erfolgt.

3. Verfahren nach einem der vorhergehenden Ansprüche, bei welchem das nichtmagnetische Blech (30) herangezogen wird, in dem ein Laserschneidteil, und/oder ein Sieb- und/oder Schablonendruckteil herangezogen und/oder gefertigt wird.

4. Verfahren nach einem der vorhergehenden Ansprüche, bei welchem an das Magnetblech (20) an oder entlang zumindest einer flächigen Erstreckung des Magnetblechs (20) ein elektrisches Isolationsmaterial (60) angeordnet wird.

5. Verfahren nach einem der vorhergehenden Ansprüche, bei welchem die Magnetbleche (20), bevor sie gestapelt werden, gewalzt werden.

6. Magnetblechstapel, hergestellt nach einem Verfahren nach einem der vorhergehenden Ansprüche, bei welchem die Magnetbleche (20) entlang einer Stapelrichtung (S) einander folgend gestapelt sind, wobei vorzugsweise die Bereiche (40), welche mittels additiver Fertigung mit weichmagnetischem Material (50) gefüllt sind, nicht sämtlich vollständig überlappen.

7. Elektrische Maschine mit einem Rotor (100) und/oder Stator (200), welcher mit einem Magnetblechstapel (10) nach einem der vorhergehenden Ansprüche und/oder mit einem Verfahren nach einem der vorhergehenden Ansprüche gebildet ist.

8. Elektrisches Fahrzeug mit einer elektrischen Maschine (300) nach dem vorhergehenden Anspruch.

## Claims

1. Method for manufacturing a stack of magnetic sheets for an electric machine (20), in which multiple magnetic sheets (20) are stacked which are manufactured according to a method in which a nonmagnetic sheet (30) which is flat in extension is used, which is manufactured as a punched part and/or a cut part and has recessed regions (40) along the flat extension, wherein these regions (40) are filled by means of additive manufacturing of a soft-magnetic material (50) fixed to the sheet (30) in a material-bonded manner, wherein the magnetic sheets (20) are tempered in order to adjust grain growth and/or interdiffusion at material-bonded connection points.

2. Method according to claim 1, in which the additive manufacturing takes place by means of powder deposition welding and/or by means of a wire-based electric arc and/or by means of cold metal transfer, in particular laser-based and/or electric-arc-based, and/or by means of printing of particle-filled pastes.

3. Method according to one of the preceding claims, in which the nonmagnetic sheet (30) is used in which a laser cut part, and/or a screen printing and/or stencil printing part is used and/or manufactured.

4. Method according to one of the preceding claims, in which an electrical insulation material (60) is arranged on the magnetic sheet (20) on or along at least one flat extension of the magnetic sheet (20).

5. Method according to one of the preceding claims, in which the magnetic sheets (20) are rolled before they are stacked.

6. Stack of magnetic sheets, produced in accordance with a method according to one of the preceding claims, in which the magnetic sheets (20) are stacked following one another along a stack direction (S), wherein the regions (40) that are filled with soft-magnetic material (50) by means of additive manufacturing preferably do not all completely overlap.

7. Electric machine with a rotor (100) and/or stator (200), which is formed with a stack of magnetic sheets (10) according to one of the preceding claims and/or with a method according to one of the preceding claims.

8. Electric vehicle with an electric machine (300) according to the preceding claim.

## Revendications

1. Procédé de fabrication d'un empilement de tôles magnétiques pour une machine (20) électrique, dans lequel on empile plusieurs tôles (20) magnétiques, qui sont fabriquées suivant un procédé dans lequel on tire parti d'une tôle (30) amagnétique ayant une étendue en surface, que l'on fabrique sous la forme d'une pièce estampée et/ou d'une pièce découpée, qui a des parties (40) retirées le long de son étendue en surface, dans lequel on remplit ces parties (40) au moyen d'une fabrication additive d'un matériau (50) à magnétisme doux, qui est lié à coopération de matière à la tôle (30), dans lequel on fait subir aux tôles (20) avant de les empiler un recuit, pour adapter la croissance de grain et/ou l'interdiffusion aux points de liaison à coopération de matière.

2. Procédé suivant la revendication 1, dans lequel la fabrication additive s'effectue au moyen d'une soudure par dépôt de poudre et/ou au moyen d'un arc électrique sur la base d'un fil et/ou au moyen d'un cold métal transfert, notamment sur la base d'un laser et/ou sur la base d'un arc électrique et/ou au moyen d'une application sous pression de pâtes remplies de particules.

3. Procédé suivant l'une des revendications précédentes, dans lequel on tire parti de la tôle (30) amagnétique, en tirant parti et/ou en fabriquant une pièce découpée au laser et/ou par sérigraphie et/ou au pochoir.

4. Procédé suivant l'une des revendications précédentes, dans lequel on met sur la tôle (20) magnétique, sur ou le long d'au moins une étendue en surface de la tôle (20) magnétique, un matériau (60) isolant du point de vue électrique.

5. Procédé suivant l'une des revendications précédentes, dans lequel on lamine les tôles (20) magnétiques avant de les empiler.

6. Empilement de tôles magnétiques fabriqué par un procédé suivant l'une des revendications précédentes, dans lequel les tôles (20) magnétiques sont empilées en se suivant les unes les autres suivant une direction (S) d'empilage, dans lequel, de préférence, les parties (40), qui sont remplies de matériau (50) à magnétisme doux, au moyen d'une fabrication additive, ne se chevauchent pas entièrement dans l'ensemble.

7. Machine électrique comprenant un rotor (100) et un stator (200), qui est formée d'un empilement (10) de tôles magnétiques suivant l'une des revendications précédentes et/ou par un procédé suivant l'une des revendications précédentes.

8. Véhicule électrique comprenant une machine (300) électrique suivant la revendication précédente.
